# EUROPEAN PATENT APPLICATION

(11) **EP 1 498 251 A1**
(43) Date of publication of application: **19.01.2005**
(21) Application number: 03717639.3
(22) Date of filing: 18.04.2003
(51) Int. Cl.: B29C 45/14

(54) **METHOD FOR PRODUCING IN-MOLD DECORATED ARTICLE AND IN-MOLD DECORATED ARTICLE**

(30) Priority: 19.04.2002 JP 2002118391
(71) Applicant: ASAHI GLASS COMPANY LTD., Tokyo 100-8405 (JP)
(72) Inventor: FUJII, Hiroyuki, Asahi Glass Company, Limited, Ichihara-shi, Chiba 290-8566 (JP); HOSOYA, Hideharu, Asahi Glass Company, Limited, Ichihara-shi, Chiba 290-8566 (JP); YOKOTA, Nobuyuki, Asahi Glass Company, Limited, Ichihara-shi, Chiba 290-8566 (JP); TAKAHASHI, Masaaki, GE Plastics Japan Ltd., Mooka-shi, Tochigi 321-4367 (JP)
(74) Representative: Müller-Boré & Partner Patentanwälte
(86) International application number: PCT/JP2003/004956
(87) International publication number: WO 2003/089223

(57) **Abstract**

A process for producing an in-mold decorated product, capable of producing a resin-formed product having a sharp and highly precise image without a blur, with low cost even though the production quantity is small, is provided. It comprises a step (A) of decorating a surface of a highly transparent ink receiving layer having a haze of at most 70% provided at a surface of a substrate, with a design by means of an ink-jet printing; and a subsequent step (B) of placing thus formed decorated substrate in a metal mold so that the ink receiving layer is positioned inside, and thereafter, injection-molding a molten resin in the metal mold to obtain a formed product as an entire one-piece body.

## Description

### TECHNICAL FIELD

The present invention relates to a process for producing an in-mold decorated product, to be used for e.g. producing a resin (plastic)-formed product having a decoration on its surface. In particular, the present invention relates to a process for producing an in-mold product, suitable for producing a resin formed product to be used for members such as housings or covers of various types of electrical products such as personal computers, cameras and cell phones, or for automobile members such as automobile tail lamps.

### BACKGROUND ART

In a conventional process for producing an in-mold decorated product, a desired design is usually printed on a thermoplastic film by means of a screen printing, and the printed film is shaped by means of a vacuum forming or an air pressure forming. Then, the shaped printed film is set in the cavity of a mold, and a thermoplastic resin is injected to obtain a product. A product by such a decoration method (hereinafter referred to as the decorated product) has merits in comparison with a product produced by painting the design in that the finished product is excellent in beauty and the process is environment-friendly since the process does not use solvent that is required for painting.

However, such a decorated product is poor in sharpness as compared with a product by e.g. photography, and is not satisfactory in terms of image quality. Further, when a printed film is set in the cavity and a thermoplastic resin is injected, there is a case that a part of ink printed on the film in the vicinity of the gate flows out to cause a blur. Therefore, there is such a problem that skill and time are required in determining the position of the gate, design of the mold, setting up of forming conditions or the like. Further, there is a problem that when a design to be printed on a decorated product is complicated, plenty of expensive screens and stencils need to be prepared which increases man-hour and product cost.

As disclosed, for example, in JP-A-4-320825 (U. S . Patent 5275764) and JP-A-11-240441, an in-mold process or an in-mold decoration process (IMD) is proposed as a process for producing tail lamp assemblies for automobiles. In the in-mold decoration process, decoration is performed in a forming cycle of a substrate. Namely, one or more colored or decorated substrates are placed in a single mold cavity, and then, a molten resin is injection-molded in the cavity of the mold to obtain an integrally formed assembly having one or more colorations and decorations in a single lens panel. Such an integrally formed assembly product obtained by this method can produce a uniform color distribution when it is operated and the cost and the production time can be reduced as compared with other products.

In the above-mentioned in-mold decoration process, a process disclosed in JP-A-11-240441 employs a screen printing employing a screen of a finely woven cloth, as means for decorating the surface of the substrate. The screen printing is a useful method for decorating various types of plastic substrates since the thickness of ink can precisely be changed and adjusted, and provides a beautifully finished product as compared with e.g. a painting method.

However, when such screen printing is employed, it is necessary to prepare a mesh screen densely woven under a precise control by employing a filament having a precise dimension. It takes much cost and longer time especially in a case where design and color are complicated. Further, in the screen printing, since it is necessary to provide a precise decoration on a substrate, a complicated apparatus with an edge guide, a mechanical stopper and an automatic controller, is required which is not easily obtainable.

In the in-mold decoration process employing a screen printing which requires such a precise and complicated apparatus, the cost per quantity becomes high when the production quantity is small, and therefore, the production quantity should be large. Accordingly, there is a problem that such in-mold decoration process can not sufficiently satisfy needs for a small lot. Further, since the ink employed for the screen printing is likely to cause the washout of the ink under a high temperature condition at the time of forming, means for preventing it is necessary. Although a surface decoration (image) of a resin-formed product thus produced is better than that of a painted product as described above, the sharpness is not sufficient as compared with e.g. a photography, and it needs to be improved.

It is an object of the present invention to provide a process for producing an in-mold decorated product, wherein no cost increase is induced without employing a complicated apparatus even in a case of a small lot, and no washout of ink used for decoration occurs at the time of forming.

Further, it is another object of the present invention to provide a process for producing an in-mold decorated product having a sharp printed image comparable to a product obtained by e.g. photography, and an excellent image quality without a blur of printing; and such an in-mold decorated product.

### DISCLOSURE OF THE INVENTION

In the present invention, extensive studies have been made to solve the above-mentioned problems. As a result, it has been found that the above-mentioned problems can be solved by employing a new process for producing an in-mold decorated product wherein a highly transparent ink receiving layer having a haze of at most 70% is formed on a substrate and an ink-jet printing is made on the ink receiving layer. In particular, it has been found that a particularly good result can be obtained when an ink receiving layer made of a particular material is employed as the ink receiving layer formed on the substrate.

The present invention has the following constitutional features.
(1) A process for producing an in-mold decorated product, comprising:
   a step (A) of decorating a surface of a highly transparent ink receiving layer having a haze of at most 70% provided on a surface of a transparent substrate with a design by means of an ink-jet printing; and
   a step (B) of placing the formed decorated substrate in a mold so that the ink receiving layer is positioned inside, and injection-molding a molten resin in the mold to obtain a formed product as an entire one-piece body.
(2) The process for producing an in-mold decorated product according to above (1), wherein the ink receiving layer is a pore-absorption type ink receiving layer containing a pigment and a binder.
(3) The process for producing an in-mold decorated product according to the above (1) or (2), wherein the pore-absorption type ink receiving layer has a mean pore radius of from 3 to 25 nm and a pore volume of from 0.3 to 2.0 cm³/g.
(4) The process for producing an in-mold decorated product according to the above (1), wherein the ink receiving layer is a swelling type ink receiving layer containing a hydrophilic polymer and a pigment.
(5) The process for producing an in-mold decorated product according to the above (1) or (4), wherein the swelling type ink receiving layer contains at most 200 parts by weight of the pigment to 100 parts by weight of the hydrophilic polymer.
(6) The process for producing an in-mold decorated product according to the above (1), (4) or (5), wherein an interlayer containing a pigment and a binder, is provided between the substrate and the swelling type ink receiving layer.
(7) The process for producing an in-mold decorated product according to the above (6), wherein the interlayer is a pore-absorption type ink receiving layer containing a pigment and a binder.
(8) The process for producing an in-mold decorated product according to any one of the above (1) to (7), wherein the ink for the ink-jet printing is a pigment ink.
(9) The process for producing an in-mold decorated product according to any one of the above (1) to (8), wherein the molten resin is a polycarbonate, a polyacrylate, a polystyrene, a polyester, a modified polyphenylene ether, an acrylonitrile/butadine/styrene copolymer, a polyamide, a polyethylene or a polypropylene, or a polymer alloy consisting of at least two of these.
(10) An in-mold decorated product which comprises a substrate having an ink receiving layer applied with an ink-jet printing, wherein a resin layer is formed so as to be in contact with the ink receiving layer.

### BRIEF DESCRIPTION OF THE DRAWINGS

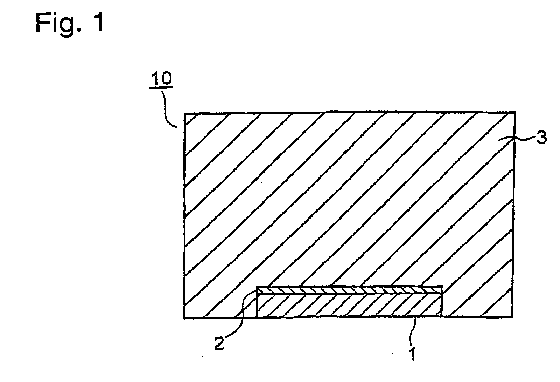

Fig. 1: A cross-sectional view of an example of an in-mold decorated product produced by the process for producing an in-mold decorated product of the present invention.

### Explanation of reference numerals

1: substrate
2: decorated ink receiving layer
3: resin layer
10: in-mold decorated product produced by the process for producing an in-mold decorated product of the present invention

### BEST MODE FOR CARRYING OUT THE INVENTION

In the process for producing an in-mold decorated product of the present invention, the steps (A) and (B) are carried out as described above. Each of the steps are described as follows.

First of all, in the present invention, the step (A) of decorating the specified receiving layer provided on a surface of a transparent substrate with a design by means of an ink-jet printing, is carried out. Here, the transparent substrate is preferably one having a haze of at most 15%, particularly preferably one having a haze of at most 5%. Thus, various types of synthetic resin films or sheets having high transparency can be employed as the substrate. The synthetic resin is preferably a thermoplastic resin, and for example, a polycarbonate, a polyacrylate, a polystyrene, a polyester such as a polyethylene terephthalate, a modified polyphenylene ether, an acrylonitrile/butadiene/styrene copolymer, a polyamide, a polyethylene, a polypropylene, a polymer alloy consisting of at least two of them may be mentioned. Among these, a polycarbonate is particularly preferred from viewpoints of heat resistance, impact resistance, transparency and three-dimensional workability. Further, the thickness of the substrate is preferably from 0.1 to 1 mm. When the thickness is less than 0.1 mm, the substrate is likely to be destroyed by a pressure of molten resin at a time of molding. When the thickness is thicker than 1 mm, it becomes difficult to form a decorated product having a thin wall thickness. The thickness is particularly preferably from 0.1 to 0.5 mm.

As the ink receiving layer provided on the substrate, one having an excellent transparency with a haze of at most 70% is employed. If the haze is more than 70%, the image of an in-mold decorated product obtained, may become fuzzy and not clear, such being not preferred. The haze is particularly preferably at most 50%. Here, in the present invention, measurement of haze is performed in compliance with JIS K7165. The ink receiving layer may be a so-called pore-absorption type receiving layer in which ink is accepted in pores between fine particles, or a swelling type receiving layer in which ink is fixed by the swelling of the resin coat layer. In a case of the pore-absorption type receiving layer, a sharp image can be obtained, and decorated images are not likely to be blurred or deteriorated even in a case where the temperature of molten resin is high since the heat resistance of the ink receiving layer is excellent, therefore such being preferred. In a case of the swelling type receiving layer, a decorated product is not likely to be damaged even in a case of in-mold forming to form a three-dimensional product since the ink receiving layer is excellent in flexibility such being preferred. The thickness of the ink receiving layer is selected also depending on the absorption property of ink, the strength of the ink receiving layer, the purpose of use or the like, and is preferably from 2 to 80 µm. If the thickness is less than 2 µm, the ink receiving effect of the ink receiving layer is hardly exhibited. On the other hand, if it exceeds 80 µm, the transparency and the strength may be decreased, such being not preferred. In particular, the thickness of the ink receiving layer is preferably from 10 to 50 µm.

The pore-absorption type ink receiving layer preferably has a mean pore radius of from 3 to 25 nm, particularly preferably from 5 to 15 nm, and a pore volume of from 0.3 to 2.0 cm³/g, particularly preferably from 0.5 to 1.5 cm³/g. The pore-absorption type ink receiving layer preferably contains a pigment and a binder. The pigment is preferably an inorganic pigment. Examples of the pigment include silica, alumina, boehmite, synthetic fine silica, synthetic fine alumina silicate, synthetic silica obtained by vapor phase synthesis, zeolite, montmorillonite mineral, saponite mineral, hectorite mineral, stevensite mineral, hydrotalcite mineral, smectite mineral, bentonite mineral, calcium carbonate, magnesium carbonate, calcium sulfate, barium sulfate, titanium oxide, titanium, zinc oxide, zinc carbonate, aluminum silicate, calcium silicate, magnesium silicate, kaolin, talc, aluminum oxide, aluminum hydroxide, polyaluminum hydroxide compounds, alumina hydrate, plastic pigments, urea resin pigments, cellulose particles, starch particles, silica-alumina composite particles.

Among them, synthetic silica obtained by vapor phase synthesis, alumina and boehmite are preferred to give an ink receiving layer with excellent transparency. In particular, boehmite (Al₂O₃·nH₂O, n = from 1 to 1.5) is preferred in view of ink absorption, fixing of ink and transparency.

As the binder, starch or its modified product, polyvinyl alcohol or its modified product, gelatin or its modified product, casein or its modified product, a polyvinyl acetal resin, a styrene·butadiene rubber latex, a nitrile-butadiene rubber latex, a cellulose derivative such as hydroxycellulose or hydroxymethylcellulose, a water-soluble polymer such as polyvinyl pyrrolidone, polyacrylic acid or a polyacrylamide, an alcohol-soluble polymer or a mixture thereof may be used. In particular, polyvinyl alcohol or its modified product is preferably used for good ink absorption and water resistance. The binder is contained preferably in the ink receiving layer in an amount of from 1 to 50 parts by mass, in particular from 5 to 30 parts by mass, based on 100 parts by weight of the pigment, though it is not simply determined since different materials have different properties.

The swelling type ink receiving layer preferably contains a hydrophilic polymer and a pigment. The hydrophilic polymer means a polymeric substance having a hydrophilic functional group in the molecule in the form of an aqueous solution or in a self-emulsified state. Preferred examples include urethane resins or their modified products, polyvinyl alcohols or their modified products, polyvinyl pyrrolidone or their modified products, cellulose derivatives such as methylcellulose, carboxymethylcellulose and hydroxymethylcellulose, casein or its modified products, gelatin or its modified products. Among them, a modified urethane resin is particularly preferred for its excellent heat resistance. In the present invention, a modified urethane resin means a water-based urethane resin which is an aqueous dispersion of a urethane resin obtained by self-emulsification of a stably dispersible urethane resin having a hydrophilic group introduced into the urethane backbone or with the help of an external emulsifier. As the modified urethane resin, a self-emulsifiable urethane resin obtained from a polycarbonate polyol and an aliphatic isocyanate is preferred. As the pigment, those mentioned for the pore-absorption type ink receiving layer may be mentioned, and an inorganic pigment is particularly preferred.

The mixing ratio of the hydrophilic polymer and the pigment for forming the swelling type ink receiving layer, is not simply determined since the property depends on the materials. However, the pigment is preferably at most 200 parts by weight, particularly preferably at most 150 parts by weight based on 100 parts by weight of the hydrophilic polymer.

In a case where the ink receiving layer is a swelling type ink receiving layer, it is preferred that an interlayer containing a pigment is provided between the substrate and the swelling type ink receiving layer. By forming the interlayer, the bonding strength between the swelling type ink receiving layer and the substrate is increased via such interlayer, whereby the heat resistance of the ink receiving layer is improved. In such a construction, when the molten resin is injected at the time of injection molding, the printed swelling type ink receiving layer in the vicinity of the injection gate is prevented from being deformed by the influence of heat, so that it is easily peeled off from the film. For the interlayer, the same compound as the pore-absorption type ink receiving layer is preferably employed. The thickness of the interlayer is preferably from 0.2 to 15 µm.

The ink receiving layer is formed by preparing a coating solution containing constituents of the above-mentioned pore-absorption type ink receiving layer or the resin-swelling type ink receiving layer, and coating the surface of the substrate with the coating solution by an appropriate coating means. As the coating means, a roll coater, an air knife coater, a blade coater, a rod coater, a bar coater, a comma coater, a gravure coater, a die coater, a curtain coater, a spray coater, a slide coater or the like may be employed. After the coating, it is dried. As the drying method, hot air, infrared rays, a heating cylinder or the like may be mentioned.

Here, in order to improve the adhesiveness of the ink receiving layer, it is possible to treat the surface of the substrate in advance by means of a corona discharge treatment, a primer coating or the like.

The ink receiving layer provided on a surface of the substrate, is decorated with a design by means of an ink-jet printing. The design (graphics) to be decorated is selected in accordance with the purpose of use, the type, category or the like of final products. In the present invention, since the ink receiving layer is decorated with a design by means of an ink-jet printing, various colors, designs or the like can be easily and precisely printed. The ink-jet printer is appropriately selected depending on the type of ink to be printed. As the ink to be printed, an water base dye ink, an water base pigment ink, a solvent type dye ink, a solvent type pigment ink or a solid ink may be employed. Among these, in a case where a high precise image is required, a dye type ink is preferably employed. Meanwhile in a case where an image of high fastness is required, a pigment type ink is preferably employed.

After the ink-jet printing is completed, it is preferred to dry or cure the ink depending on the type of the ink employed. In a case where the ink is of a solvent type or a water base type, the ink can be dried by employing a gas type or an electric type dryer. In this case, in order to avoid a deformation of the substrate, it is preferred to control the temperature and the duration for drying. In a case where a solvent type ink is employed, it is preferred to perform drying with a sufficient air flow to remove a fume. An infrared ray drying may be employed depending on the type of ink. In a case where the ink is of a UV-curable type, various types of commercially available dryers can be suitably employed.

Then, in the present invention, a final product (decorated product) is produced through a step (B) of placing a substrate decorated by means of an ink-jet printing in a mold so that the ink receiving layer is positioned towards inside, and thereafter, a molten resin is injected into the mold whereby the product of an entire one-piece body is formed. Since the in-mold decorated product thus obtained has the image formed at the inner side of a sheet for protection, it is excellent in abrasion resistance and weather resistance.

Fig. 1 is a cross-sectional view of an example of a decorated product obtained by the present invention. Fig. 1 shows a decorated product 10 having a construction that a resin layer 3 is present on an ink receiving layer 2 of a substrate 1. In the case of Fig. 1, a molten resin is injection-molded so as to be in contact with the decorated ink receiving layer 2 to form the resin layer 3 in the step (B).

Here, the step (B) of the present invention basically employs the process disclosed in JP-A-11-240441 except that the substrate is one decorated by ink-jet printing, and the step (B) can be carried out in the same manner as the process.

In the present invention, in a case where the decorated product is a plate-like product, the step (B) is carried out subsequently to the step (A). However, in a case where the decorated product has a complicated three-dimensional form, it is preferred to form the decorated substrate so as to be adaptable in a mold having a shape corresponding to the three-dimensional shape of the decorated product, before the step (B). In such forming step, a molding machine such as a vacuum molding machine or an air pressure molding machine is preferably employed, and a preferred molding temperature and a preferred molding pressure depending on the resin for the substrate are employed. In a case where the substrate is a polycarbonate film, it is preferred that the temperature is from 160 to 220°C and the pressure is from 0.1 to 10 MPa.

The mold in the step (B) can be made of a material such as metal, gypsum, hardwood, glass fibers, a syntactic foam or silicone. These material can be easily processed and can be subjected to a minor correction. In such a case where the substrate material is a polycarbonate, a high-durable material such as a carbon steel, a pre-hardened steel or a stainless steel is preferred.

The position of the gate provided in the mold, is selected so that the decorated substrate is not wrinkled by a shock applied when a molten resin (a resin in a molten state) is injection-molded through the gate. The molten resin injected through the gate may be a thermoplastic resin, and for example, one of various types of resins such as a polycarbonate, a polyacrylate, a polystyrene, a polyester, a modified polyphenylene ether, an acrylonitrile/butadiene/styrene copolymer, a polyamide, a polyethylene, a polypropylene or a polymer alloy comprising at least two types of them may be employed. It is more preferably to be at least one type selected from the group consisting of a polycarbonate, a polyacrylate and a modified polyphenylene ether. A polycarbonate and/or a polyacrylate is particularly preferred. The resin does not always have to be the same as the resin of the above-mentioned substrate. However, it is preferred to employ the same resin since high adhesiveness to the substrate can thereby be obtained. In particular, a polycarbonate resin is preferably employed for the molten resin as well as for the substrate in the present invention.

In the present invention, in order to improve the weather resistance, the light resistance, the oxidation resistance or the like of the decorated product, a resin film having these properties can be employed together with the substrate. For example, a resin film made of a fluorine-containing polymer such as a polyfluorovinylidene, a polytetrafluoroethylene or the like may be mentioned.

Thus, a decorated product obtained by the process for producing an in-mold decorated product of the present invention, comprises a substrate, an ink receiving layer applied with an ink-jet printing, and an injection molded resin layer.

A decorated product obtained by the process for producing an in-mold decorated product of the present invention, is not particularly limited but includes various types of ones employed for various fields. Among these, it is suitable for producing various types of transparent resin-formed products having fine decorations, in particular, a member such as a housing or a cover for various types of electronics appliances such as PCs, cameras, and cell phones, a tail lamp, a dashboard, a lamp assembly inside of a door for automobiles, an alarm lamp for industrial use, interior parts for automobiles (a center panel, a handle cover, etc.), or a sign board.

### EXAMPLES

Now, the present invention will be more specifically described with Examples. However, it is a matter of course that the present invention should not be construed to be limited to these Examples. Examples 1 to 6 are Examples of the present invention, and Examples 7 and 8 are Comparative Examples. Further, "part" in the Examples means part by mass unless it is defined otherwise. Here, in these Examples, haze was measured by a haze meter (Suga Test Instruments Co., Ltd., HGM-30P).

### EXAMPLE 1

A corona discharging treatment was applied to a polycarbonate film (manufactured by Asahi Glass Company, Limited, tradename: Lexan Film, model No.: 8010, thickness: 0.125 mm, haze: 0.4) under a condition of 270 W·min/m². The surface of the polycarbonate film on which the corona discharge treatment was applied, was coated with an ink receiving layer composition (a water base slurry having a solid content of 17% and a viscosity of 60 mPa·s containing an alumina sol: 100 parts on a solid basis, polyvinyl alcohol (PVA, manufactured by Nippon Synthetic Chemical Industry Co., Ltd., tradename: Gohsenol NH-18): 10 parts on a solid basis, and boric acid: 0.5 parts on a solid basis) with a bar coater so that the coating thickness became 20 µm after drying. Then, it was dried with a hot air dryer at 80°C for 20 minutes to obtain a polycarbonate film having an ink receiving layer at the surface.

Here, the alumina sol employed in the ink receiving layer composition, was an alumina sol obtained by adding a sodium aluminate solution to a solution of polyaluminum chloride in water heated to 95°C, washing the resulting aged slurry with ion-exchanged water, raising the temperature to 95°C again, deflocculating the slurry with an acetic acid and condensing the slurry, and performing an ultrasonic treatment.

### EXAMPLE 2

A polycarbonate film having an ink receiving layer at its surface was obtained in the same manner as Example 1 except that the ink receiving layer composition was a water-base slurry having a solid content of 10 mass% and a viscosity of 340 mPa·s containing 100 parts of a modified urethane resin (manufactured by Dainippon Ink and Chemicals Inc., tradename: Patelacol IJ-70, and so forth) on a solid basis and 80 parts of alumina sol on a solid basis and that the coating thickness after drying was 10 µm.

### EXAMPLE 3

A polycarbonate film having an ink receiving layer at its surface was obtained in the same manner as Example 2 except that the ink receiving layer composition was a water-base slurry having a solid content of 10%, and a viscosity of 70 mPa·s containing 100 parts of a modified urethane resin on a solid basis and 80 parts of colloidal silica (manufactured by Catalysts & Chemicals, Ind. Co., Ltd., tradename: Cataloid SI-80) on a solid basis.

### EXAMPLE 4

A polycarbonate film having an ink receiving layer at the surface was obtained in the same manner as Example 2 except that the ink receiving layer composition was a water-base slurry having a solid content of 10% and a viscosity of 75 mPa·s containing 100 parts of modified urethane resin.

### EXAMPLE 5

A surface of a polycarbonate film obtained in the same manner as Example 1 which was applied with a corona discharge treatment, was coated with the same ink receiving layer composition solution as one in Example 1 for forming an interlayer so that the coating thickness after drying becomes 2 µm. Thereafter, it was dried by a hot-air dryer at 80°C for 2 minutes to obtain a polycarbonate film having an interlayer at the surface. The interlayer was coated with the same ink receiving layer composition solution as one in Example 3 in the same manner as Example 3 so that the coating thickness after drying became 10 µm. Then, it was dried by a hot-air dryer at 80°C for 20 minutes to obtain a polycarbonate film having an ink receiving layer at the surface.

### EXAMPLE 6

A polycarbonate film having an ink receiving layer at its surface was obtained in the same manner as Example 2 except that the ink receiving layer composition was a water-base slurry having a solid content of 10% and a viscosity of 50 mPa·s containing 100 parts of a commercially available acryl type copolymerizable resin (manufactured by ISP, tradename: VVPR300) on a solid basis.

### EXAMPLE 7

A polycarbonate film having an ink receiving layer at its surface was obtained in the same manner as Example 1 except that the ink receiving layer composition was a water-base slurry having a solid content of 10% and a viscosity of 80 mPa·s containing 100 parts of commercially available silica gel (manufactured by Tokuyama Corp., tradename: Finesil X-37) and 30 parts of polyvinyl alcohol (manufactured by Nippon Synthetic Chemical Industry Co., Ltd., tradename: Gohsenol NH-18) on a solid basis.

The ink receiving layer of each of the six types of polycarbonate film obtained by the above Examples 1 to 7 was ink-jet printed with gray scale patterns of five colors i.e., yellow, magenta, cyan and black by means of a pigment ink type ink jet printer (manufactured by Seiko Epson Corp., tradename: MC-2000). Here, the surface of the polycarbonate film on which the corona discharge treatment was applied and no ink receiving layer was formed, was ink-jet printed in the same manner. However, the ink was not absorbed at all and no image was formed.

Then, the printed polycarbonate films were molded to be a plate shape by employing an injection molding machine. Each formed product obtained was trimmed and placed in a mold having a surface corresponding to the shape of the formed product (150 mm wide × 150 mm deep × 3 mm thick).

Then, molten resin of polycarbonate was injected towards the printed surface of the formed product through a side gate provided in a mold cavity in the mold, and an in-mold forming was performed under forming conditions that the mold temperature was 70°C, the injection speed was low (set to be from 8 to 20%) and the resin temperatures were 230°C, 260°C and 290°C, to form each product of an entire one-piece body (corresponding to Fig. 1).

The results obtained are summarized in Table 1. In Table 1, ○, × and Δ with respect to the heat resistance, the three-dimensional forming property and the image sharpness of the in-mold formed products mean as follows. Heat resistance:
○: No deformation of image was observed.
Δ: Slight deformation of image was observed.
×: Significant deformation of image was occurred and original image could not be recognized.
Three-dimensional forming property:
○: No crack was occurred to the image.
Δ: Slight crack was occurred to the image.
×: Significant crack was occurred to the image and original image could not be recognized.
Image sharpness:
○: Image had a high sharpness.
×: Image had a low sharpness.

As understandable from the results shown in Table 1, the formed products produced in the Examples of the present invention had sharp printed images at their surfaces, there was no blur of the printing and the images were excellent. Further, since the image printing was carried out by an ink jet printer, cost per quantity was low even though the production quantity was small, and the workability was simple as well.

### EXAMPLE 8

In Example 1, a screen printing was performed to a surface of a polycarbonate film on which the corona-discharge treatment was applied and the ink receiving layer was not formed, instead of the ink-jet printing. The screen printing was carried out under a common condition. A formed product as an entire one-piece body was produced in the completely same manner as Example 1 except for the above difference. The results are shown in Table 1.

As shown in Table 1, the formed product produced in Example 8 had a printed image at its surface whose sharpness were insufficient and blur of the printing was observed. Here, printing with many colors as much as five colors was performed by a screen printer, works for exchanging screens and inks were required and these works were troublesome, which resulted in a high cost per quantity in a case of a small quantity production.

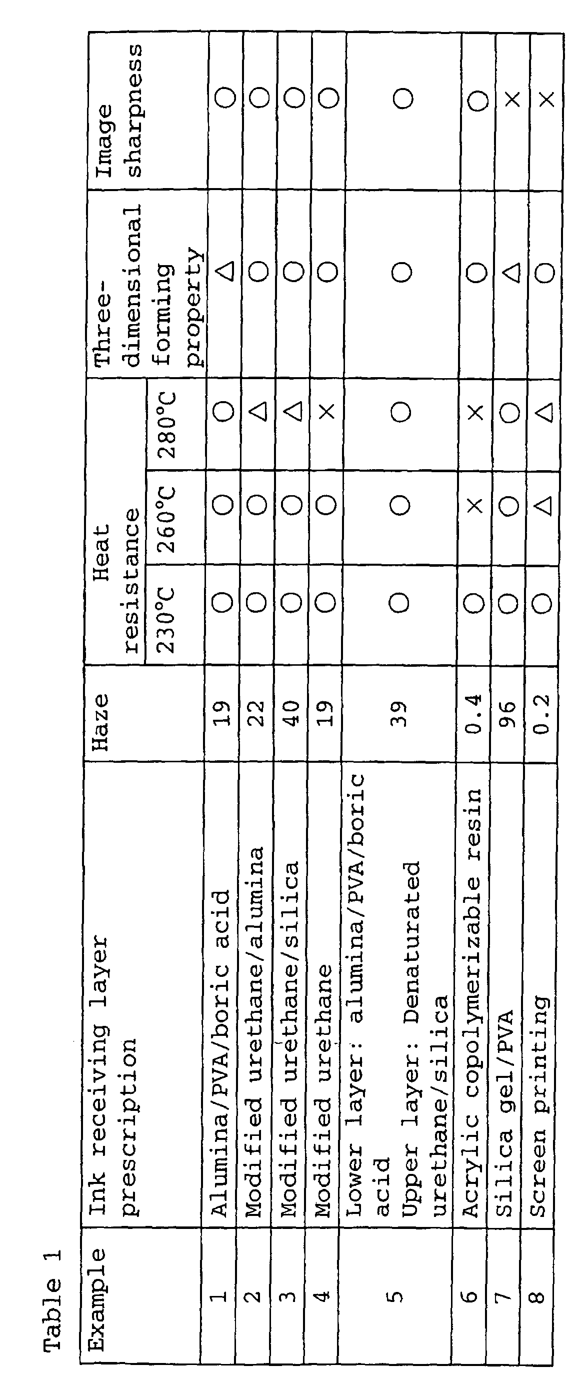

### INDUSTRIAL APPLICABILITY

According to the present invention, a process for producing an in-mold decorated product, employed for e.g. producing a resin-formed product having a decoration at its surface, is provided, which sufficiently satisfies the needs for a small quantity production since no complicated apparatus is required and no increase of cost is induced even in a case where the manufacturing quantity is small, and which does not cause the washout of ink employed for decoration at the time of forming.

Further, according to the present invention, an in-mold decorated product having a sharp printed image comparable with a product obtained by e.g. photography, and having an excellent image without having a printing blur, is provided.

Therefore, by employing the production process of the present invention, it becomes possible to provide various types of consumer electric products and information devices, dedicated for each user, with a design, desired by each user, on e.g. their housings which has been substantially impossible heretofore.

## Claims

1. A process for producing an in-mold decorated product, comprising:
a step (A) of decorating a surface of a highly transparent ink receiving layer having a haze of at most 70% provided on a surface of a transparent substrate with a design by means of an ink-jet printing; and
a step (B) of placing the formed decorated substrate in a mold so that the ink receiving layer is positioned inside, and injection-molding a molten resin in the mold to obtain a formed product as an entire one-piece body.

2. The process for producing an in-mold decorated product according to Claim 1, wherein the ink receiving layer is a pore-absorption type ink receiving layer containing a pigment and a binder.

3. The process for producing an in-mold decorated product according to Claim 1 or 2, wherein the pore-absorption type ink receiving layer has a mean pore radius of from 3 to 25 nm and a pore volume of from 0.3 to 2.0 cm³/g.

4. The process for producing an in-mold decorated product according to Claim 1, wherein the ink receiving layer is a swelling type ink receiving layer containing a hydrophilic polymer and a pigment.

5. The process for producing an in-mold decorated product according to Claim 1 or 4, wherein the swelling type ink receiving layer contains at most 200 parts by weight of the pigment to 100 parts by weight of the hydrophilic polymer.

6. The process for producing an in-mold decorated product according to Claim 1, 4 or 5, wherein an interlayer containing a pigment and a binder, is provided between the substrate and the swelling type ink receiving layer.

7. The process for producing an in-mold decorated product according to Claim 6, wherein the interlayer is a pore-absorption type ink receiving layer containing a pigment and a binder.

8. The process for producing an in-mold decorated product according to any one of Claims 1 to 7, wherein the ink for the ink-jet printing is a pigment ink.

9. The process for producing an in-mold decorated product according to any one of Claims 1 to 8, wherein the molten resin is a polycarbonate, a polyacrylate, a polystyrene, a polyester, a modified polyphenylene ether, an acrylonitrile/butadiene/styrene copolymer, a polyamide, a polyethylene or a polypropylene, or a polymer alloy consisting of at least two of these.

10. An in-mold decorated product which comprises a substrate having an ink receiving layer applied with an ink-jet printing, wherein a resin layer formed so as to be in contact with the ink receiving layer.
